# EUROPÄISCHE PATENTSCHRIFT

(11) **EP 4 571 377 B1**
(45) Veröffentlichungstag und Bekanntmachung des Hinweises auf die Patenterteilung: **18.02.2026**
(21) Anmeldenummer: 23216760.1
(22) Anmeldetag: 14.12.2023
(51) Int. Cl.: G02B 6/255, G02B 6/36, G02B 6/44

(54) **AUFNAHMEVORRICHTUNG FÜR LICHTWELLENLEITER-KOMPONENTE**
RECEIVING DEVICE FOR OPTICAL WAVEGUIDE COMPONENT
DISPOSITIF DE RÉCEPTION POUR COMPOSANT DE GUIDE D'ONDES OPTIQUES

(43) Veröffentlichungstag der Anmeldung: 18.06.2025
(73) Patentinhaber: Hauff-Technik GRIDCOM GmbH, 73494 Rosenberg (DE)
(72) Erfinder: GSCHWINDER, Roland, 73431 Aalen (DE)
(74) Vertreter: Szynka Smorodin Patentanwälte Partnerschaft mbB

(56) Entgegenhaltungen:
- WO-A1-2020/239827
- US-A1- 2012 269 487
- US-A1- 2020 264 380
- US-A1- 2023 187 916

## Beschreibung

Die vorliegende Erfindung betrifft eine Vorrichtung zur Aufnahme einer Lichtwellenleiter-Komponente (auch als "LWL-Komponente" bezeichnet), eine LWL-Kassette, ein LWL-Modul und einen LWL-Modulstapel sowie die entsprechende Verwendung.

LWL-Aufnahmevorrichtungen dienen einer mechanischen Aufnahme zumindest einer LWL-Komponente, wie eines LWL-Splitters, eines LWL-Filters, eines LWL-Spleißschutzes oder eines optischen Adapters. Diese LWL-Komponenten können jedoch unterschiedliche Außengeometrien (bspw. zylinderförmig, rechteckig, quadratisch) oder Abmessungen (bspw. wenige Millimeter bis einige Zentimeter) aufweisen, was ein sicheres und zuverlässiges Fixieren der LWL-Komponenten in einer einzigen Aufnahmevorrichtung erschwert.

Beispiele von im Stand der Technik bekannten Aufnahmevorrichtungen sind in US 2012/269487 A1, WO 2020/239827 A1 und US 2023/0187916 A1 gezeigt.

Der vorliegenden Erfindung liegt die technische Aufgabe zugrunde, eine vorteilhafte Aufnahmevorrichtung für LWL-Komponenten, insbesondere die oben genannten, anzugeben.

Erfindungsgemäß löst diese Aufgabe eine Aufnahmevorrichtung nach Anspruch 1. Die Aufnahmevorrichtung umfasst ein Tragelement, ein erstes Halteelement und ein zweites Halteelement. Wie nachstehend im Einzelnen erläutert, sind das erste Halteelement und das zweite Halteelement in besonderer Weise auf einer Tragelementoberfläche des Tragelements angeordnet und ausgestaltet, um eine sichere und zuverlässige Fixierung der LWL-Komponente zu gewährleisten. So können LWL-Komponenten mit unterschiedlichen Außengeometrien oder unterschiedlichen Abmessungen sicher und zuverlässig fixiert werden.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; implizit ist die Offenbarung hinsichtlich sämtlicher Anspruchskategorien zu lesen. Werden beispielsweise die Vorteile der Aufnahmevorrichtung für einen Zweck oder eine bestimmte Anwendung beschrieben, ist dies zugleich als Offenbarung einer entsprechenden Verwendung zu sehen.

Orthogonal zu der oben und in Anspruch 1 genannten Tragelementoberfläche ist eine Tragelementhochachse definiert. Das erste Halteelement weist einen ersten Stützabschnitt und einen ersten Klemmabschnitt auf. Der erste Stützabschnitt ragt entlang der Tragelementhochachse aus der Tragelementoberfläche heraus bzw. steht aus dieser hervor. Der erste Klemmabschnitt ist über ein proximales Ende mit dem ersten Stützabschnitt verbunden und erstreckt sich bogenförmig von dem ersten proximalen Ende hin zu einem ersten distalen Ende des ersten Klemmabschnitts. Hierbei weist der erste Klemmabschnitt eine radial nach außen gewölbte erste Klemmabschnittaußenfläche auf, und zwar mit einem von dem ersten proximalen Ende zu dem ersten distalen Ende hin mit einem Abstand von dem ersten proximalen Ende zunehmenden Krümmungsradius. Bevorzugt nimmt die Krümmung von dem ersten proximalen Ende zu dem ersten distalen Ende hin stetig ab; der Krümmungsradius wird also stetig größer, bevorzugt außerdem monoton. Die Krümmung besteht im größten Teil der ersten Klemmabschnittaußenfläche, bevorzugt der ganzen.

In jedem Fall ist der erste Klemmabschnitt jedoch über den ersten Stützabschnitt mit der Tragelementoberfläche verbunden. Dabei können das erste Tragelement und das erste Halteelement integral und vorzugsweise aus demselben Material geformt sein. Hierdurch wird es möglich, das erste Tragelement und das erste Halteelement in wenigen oder einem einzigen Arbeitsschritt zu formen.

Die Aufnahmevorrichtung umfasst ferner ein zweites auf der Tragelementoberfläche angeordnetes Halteelement. Diesem zweiten Halteelement ist der erste Klemmabschnitt zugewandt, und zwar in einer Projektion auf eine Projektionsebene, welche parallel zu einer Hauptkrümmungsebene (siehe deren Definition im Ausführungsbeispiel) des ersten Klemmabschnitts definiert ist. Mit anderen Worten blickt die erste Klemmabschnittaußenfläche zumindest teilweise in Richtung des zweiten Halteelements; ist diesem also zugewandt.

Der bogenförmige erste Klemmabschnitt kann LWL-Komponenten mit unterschiedlicher Außengeometrie und unterschiedlichen Abmessungen sicher und zuverlässig fixieren und in der Aufnahmevorrichtung halten.

Zum Beispiel sind in diesem technischen Gebiet Kunststoffteile, insbesondere Spritzgussteile aus thermoplastischen Kunststoffen, üblich und auch im vorliegenden Fall bevorzugt. Solche Bauteile weisen eine relativ ausgeprägte materialbedingte Eigenelastizität auf, welche es in Verbindung mit der bogenförmigen Ausgestaltung des ersten Klammabschnitts erleichtert, die LWL-Komponente sicher zu fixieren. Aber auch bei anderen Materialien, etwa Metallen, gibt es eine gewisse Eigenelastizität, die in Verbindung mit der federartigen Form des ersten Klemmabschnitts die Funktion als Klemmabschnitt unterstützt.

Die Fixierung der LWL-Komponente kann dabei kraftschlüssig und/oder formschlüssig erfolgen. Bei einer kraftschlüssigen Fixierung wird die LWL-Komponente beispielsweise zwischen dem ersten Klemmabschnitt, dem zweiten Halteelement und der Tragelementoberfläche geklemmt. Alternativ kann die LWL-Komponente beispielsweise auch nur zwischen dem ersten Klemmabschnitt und dem zweiten Halteelement geklemmt werden. Bei einer formschlüssigen Fixierung kann die LWL-Komponente zumindest teilweise unterhalb einer Stelle eines minimalen Abstands zwischen den beiden Halteelementen auf der Tragelementoberfläche liegen und von dem bogenförmigen Bereich des ersten Klemmabschnitts und dem zweiten Halteelement gegen Herausfallen bzw. unbeabsichtigtes Lösen gesichert sein. Natürlich können beide, die kraft- und die formschlüssige Fixierung, kombiniert sein.

Die schon angesprochene Eigenelastizität hilft in beiden Fällen und kann insbesondere eine Verformung zur Anpassung an die zu fixierende LWL-Komponente und/oder ein Einrasten (also eine Herstellung eines Formschlusses) ermöglichen.

Bei einer weiteren bevorzugten Ausgestaltung weist auch das zweite Halteelement einen zweiten Stützabschnitt im Sinne des ersten Stützabschnitts auf. Dieser zweite Stützabschnitt ragt also entlang der Tragelementhochachse aus der Tragelementoberfläche heraus. Ferner weist das zweite Halteelement auch einen zweiten Klemmabschnitt im Sinne des obigen ersten Klemmabschnitts auf. Der zweite Klemmabschnitt ist ebenso über ein zweites proximales Ende mit dem zweiten Stützabschnitt verbunden, erstreckt sich bogenförmig davon ausgehend hin zu einem zweiten distalen Ende und weist eine radial nach außen gewölbte zweite Klemmabschnittaußenfläche mit einem, wie bereits beschrieben, zunehmenden Krümmungsradius auf. Der zweite Klemmabschnitt ist in der Projektion auf die Projektionsebene dem ersten Klemmabschnitt zugewandt. Vereinfacht gesagt sind also die beiden Halteelemente derart (direkt oder versetzt) gegenüber angeordnet, dass diese einander (direkt oder schräg) ansehen.

Die Anordnung und die Ausgestaltung des zweiten Halteelements mit dem zweiten Stütz- und Klemmabschnitt ermöglichen es, zwischen dem ersten und dem zweiten Halteelement auch LWL-Komponenten mit unterschiedlichen Außengeometrien oder Abmessungen sicher und zuverlässig zu fixieren.

Bei einer weiteren bevorzugten Ausgestaltung weist die erste und/oder zweite Klemmabschnittaußenfläche eine Evolventenfläche einer Kreisevolvente auf. Genauer gesagt ist die erste bzw. zweite Klemmabschnittaußenfläche in der Projektion auf die Projektionsebene derart bogenförmig gekrümmt, dass vorzugsweise über einen wesentlichen Teil, bevorzugt den ganzen, deren Projektionslinie eine Kreisevolvente bildet.

Bei einer weiteren bevorzugten Ausgestaltung ist das erste distale Ende des ersten Klemmabschnitts und/oder das zweite distale Ende des zweiten Klemmabschnitts um einen ersten bzw. zweiten Abstand von der Tragelementoberfläche beabstandet, der parallel zur Tragelementhochachse definiert ist und bevorzugt höchstens 2,0 mm, vorzugsweise höchstens 1,8 mm, 1,6 mm oder sogar höchstens 1,4 mm, und bevorzugt mindestens 1,0 mm, besonders bevorzugt mindestens 1,1 mm bzw. 1,2 mm beträgt.

Bei einer weiteren bevorzugten Ausgestaltung sind die Klemmabschnittaußenflächen an dem ersten und/oder zweiten distalen Ende um einen dritten Abstand voneinander beabstandet, der größer oder gleich einem vierten Abstand, nämlich einem minimalen Abstand zwischen der ersten und der zweiten Klemmabschnittaußenfläche, ist. Dieser dritte und/oder vierte Abstand sind hierbei parallel zur Tragelementoberfläche definiert bzw. werden parallel zu dieser gemessen. Durch die spezifische Ausgestaltung dieser Abstände zueinander erzeugt der (relativ zum vierten) größere dritte Abstand einen "Rücksprung", mittels welchem ein Formschluss erzeugt und z.B. auch kleinere LWL-Komponenten wie Spleißschutze im Bereich der distalen Enden der Klemmabschnitte fixiert werden können.

Bei einer weiteren bevorzugten Ausgestaltung beträgt der dritte Abstand bevorzugt höchstens 4 mm, besonders bevorzugt höchstens 3 mm, mindestens jedoch 2 mm. Der vierte Abstand beträgt bevorzugt höchstens 3 mm, besonders bevorzugt höchstens 2 mm, mindestens jedoch 1 mm.

Die Ausgestaltung und Anordnung des ersten und des zweiten Halteelements mit den genannten Abständen zur Tragelementoberfläche und/oder relativ zueinander ermöglichen es, eine Vielzahl unterschiedlicher LWL-Komponenten sicher und zuverlässig zu fixieren, insbesondere in Kombination mit der beschriebenen Eigenelastizität der Halteelemente.

Bei einer weiteren bevorzugten Ausgestaltung ist der erste Klemmabschnitt des ersten Halteelements dem zweiten Klemmabschnitt des zweiten Halteelements zumindest teilweise, bevorzugt vollständig, unmittelbar gegenüberliegend angeordnet. Unter einem zumindest teilweisen Gegenüberliegen wird eine einander zugewandte Anordnung der Tragelementoberflächen zweier unmittelbar benachbarter Haltelemente verstanden, bei welcher in einer parallel zur Projektionsebene und parallel zur Tragelementoberfläche definierten Blickrichtung das erste Halteelement mit dem zweiten Haltelement zumindest anteilig überlappt. Die beiden Haltelemente überlappen (in der Projektion gesehen) hierbei mit mindestens 10% ihrer in der Projektion betrachteten Fläche, bevorzugt mindestens 50%, besonders bevorzugt mindestens 80%. Ferner können die sich gegenüberliegenden Klemmabschnitte auch vollständig, d.h. ihrer gesamten Fläche (in der zuvor definierten Blickrichtung) gegenüberliegen. Mit anderen Worten bilden diese beiden Haltelemente ein Halteelementpaar mit sich direkt gegenüberliegenden Haltelementen, deren Tragelementoberflächen einander zugewandt sind.

Bevorzugt weist das Tragelement zwischen dem ersten und dem zweiten Haltelement eine Tragelementaussparung auf. Dies erleichtert es, die Aufnahmevorrichtung inklusive der Halteelemente im Spritzgussverfahren herzustellen. Zudem kann hierdurch eine Flexibilität der Halteelemente erhöht und ein Herausdrücken der montierten LWL-Komponenten beispielsweise mithilfe eines Werkzeugs von einer Unterseite der Aufnahmevorrichtung her erleichtert werden.

Bei einer weiteren bevorzugten Ausgestaltung sind auf der Tragelementoberfläche zumindest in einer Längsrichtung und/oder einer Querrichtung mindestens zwei Paare aus vorzugsweise einander unmittelbar gegenüberliegenden Halteelementen angeordnet.

Bei einer weiteren bevorzugten Ausgestaltung sind auf der Tragelementoberfläche in einer Längsrichtung mindestens zwei Paare aus einander unmittelbar gegenüberliegenden Halteelementen angeordnet. Die Längsrichtung ist hierbei parallel zur Tragelementoberfläche und orthogonal zu der ersten und/oder zweiten Hauptkrümmungsebene definiert. Mit anderen Worten sind die Halteelementpaare derart zueinander angeordnet, dass mittels zweier nebeneinander liegender Halteelementpaare eine LWL-Komponente fixiert wird; dies ist bspw. für längliche (entlang einer Faserrichtung des Lichtwellenleiters gesehen) LWL-Komponenten vorteilhaft. Alternativ oder zusätzlich hierzu können auch in einer Querrichtung mindestens zwei Paare aus einander unmittelbar gegenüberliegenden Halteelementen angeordnet sein, wobei die Querrichtung hier parallel zur Tragelementoberfläche und parallel zur ersten bzw. zweiten Hauptkrümmungsebene (also orthogonal zu der Längsrichtung) definiert ist. Die Anordnung einer Mehrzahl von Halteelementpaaren in der Querrichtung ermöglicht es, eine Vielzahl von LWL-Komponenten zu fixieren. Bei einer Kombination der paarweisen Anordnung in der Längs- und der Querrichtung werden die vorgenannten Vorteile kombiniert.

Bei einer weiteren bevorzugten Ausgestaltung ist in der Projektion auf die Projektionsebene eine vertikale Ausdehnung der Klemmabschnitte größer als eine horizontale. Unter der vertikalen Ausdehnung wird hierbei die orthogonal zur Tragelementoberfläche gemessene, maximale (vertikale) Ausdehnung des Klemmabschnitts, ausgehend von seinem oberen Scheitelpunkt hin zum distalen Ende, verstanden. Vereinfacht gesagt handelt es sich hierbei um die Höhe des Scheitelpunkts über der Tragelementoberfläche. Die horizontale Ausdehnung bezeichnet hingegen die maximale Ausdehnung des Klemmabschnitts ausgehend von seinem proximalen Ende hin zu seinem distalen Ende und gemessen parallel zur Tragelementoberfläche. Vereinfacht gesagt erstrecken sich die Klemmabschnitte im Bereich zum distalen Ende hin demnach vorrangig vertikal; verfügen also in vertikaler Richtung über einen großen Hebelarm. Dieser Hebelarm wirkt in Verbindung mit der Eigenelastizität des verwendeten Materials als flexible Klemmvorrichtung für die LWL-Komponenten und ermöglicht es zudem, auf einer vergleichbar geringen Grundfläche eine Vielzahl von Halteelementpaaren auf der Tragelementoberfläche anzuordnen.

Bei einer weiteren bevorzugten Ausgestaltung weist der erste Klemmabschnitt und/oder zweite Klemmabschnitt eine Wandstärke auf, welche bevorzugt um höchstens als 15%, besonders bevorzugt höchstens 5%, von einer mittleren Wandstärke abweicht, wobei dies mindestens für 80% einer Erstreckungslänge der Klemmabschnitte von deren proximalen zu ihrem distalen Ende hin gilt. Dies vereinfacht die Herstellung der Klemmabschnitte und erhöht deren Flexibilität. Zudem wird hierdurch das Auftreten von mechanischen Spannungsspitzen an Übergängen von Bereichen unterschiedlicher Wandstärken vermieden, wodurch die Dauerfestigkeit und Eigenelastizität der Klemmabschnitte erhöht wird.

Bei einer weiteren bevorzugten Ausgestaltung ist die Aufnahmevorrichtung aus Kunststoff, vorzugsweise einstückig, vorzugsweise aus einem ABS-Kunststoff, bevorzugt als Spritzgussteil, hergestellt. Hierdurch ist es möglich, die Aufnahmevorrichtung mit ausreichenden Toleranzen kostengünstig und in großen Stückzahlen herzustellen. Zudem ist es hierdurch möglich, mechanisch und thermisch ausreichend belastbare Aufnahmevorrichtung herzustellen. Ferner sind diese Aufnahmevorrichtung kostengünstig und weisen eine vorteilhafte Eigenelastizität auf. Die Aufnahmevorrichtung kann bspw. eine Shore-Härte (D) von mindestens 68 Shore haben, mit möglichen (davon unabhängigen) Obergrenzen bei höchstens 90 bzw. 86 Shore.

Ferner kann die Aufnahmevorrichtung auch mittels Zwei-Komponenten-Spritzguss (sogenannter "2K-Spritzguss") hergestellt werden, wobei beispielsweise die Halteelemente vollständig oder teilweise aus einem gegenüber dem Tragelement weicheren Material hergestellt werden und hierdurch deren Eigenelastizität weiter erhöht wird.

Die Erfindung betrifft auch eine LWL-Kassette zur Aufnahme zumindest einer LWL-Komponente. Die LWL-Kassette umfasst zumindest eine Überlängenablage und einen Aufnahmebereich mit einer erfindungsgemäßen Aufnahmevorrichtung. In der LWL-Kassette kann natürlich eine Vielzahl von Aufnahmevorrichtungen vorgesehen sein und es können mit den LWL-Komponenten, z.B. Spleißstellen, verbundene Überlängen der Lichtwellenleiter in der direkt in der LWL-Kassette vorgesehenen Überlängenablage verwahrt werden.

Ferner betrifft die Erfindung auch ein LWL-Modul mit einer erfindungsgemäßen LWL-Kassette. Das LWL-Modul umfasst eine Mehrzahl von LWL-Kassetten und zumindest eine Patchstelle.

Ferner betrifft die Erfindung auch einen LWL-Modulstapel mit einer Mehrzahl von erfindungsgemäßen LWL-Modulen.

Die Erfindung betrifft auch eine Verwendung der erfindungsgemäßen Aufnahmevorrichtung in einer LWL-Kassette, vorzugsweise außerdem in Form einer Verwendung der LWL-Kassette in einem LWL-Modul, besonders bevorzugt in Form einer Verwendung des LWL-Modul in einem LWL-Modulstapel zur Aufnahme zumindest eines LWL-Splitters, eines LWL-Filters, eines LWL-Spleißschutzes und/oder eines optischen Adapters. Dabei kann die erfindungsgemäße Aufnahmevorrichtung integral mit der LWL-Kassette oder als ein separates, in die LWL-Kassette eingesetztes Bauteil ausgebildet sein. Zudem kann beispielsweise die erfindungsgemäße Aufnahmevorrichtung in einer LWL-Kassette angeordnet sein, welche als solche in einem LWL-Modulstapel angeordnet ist.

Im Folgenden wird die Erfindung anhand von Ausführungsbeispielen näher erläutert, wobei die einzelnen Merkmale im Rahmen der Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- **Figur 1**: eine Seitenansicht eines Teils einer erfindungsgemäßen Aufnahme-vorrichtung;
- **Figur 2**: eine vergrößerte Seitenansicht der Aufnahmevorrichtung mit eingelegter LWL-Komponente;
- **Figur 3**: eine perspektivische Ansicht der Aufnahmevorrichtung mit mehreren Halteelementpaaren;
- **Figur 4**: eine LWL-Kassette mit erfindungsgemäßer Aufnahmevorrichtung;
- **Figur 5**: eine LWL-Kassette mit erfindungsgemäßer Aufnahmevorrichtung und weiteren Halteelementen.

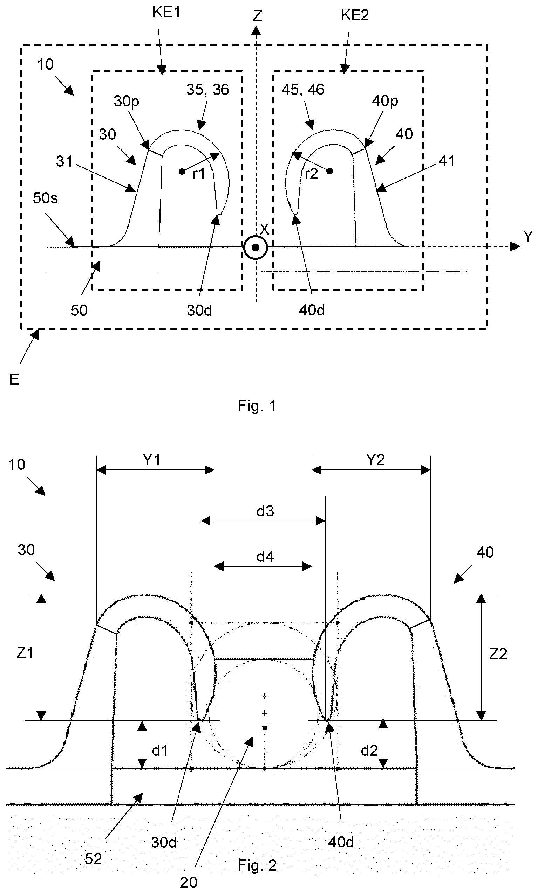

**Figur 1** zeigt eine Seitenansicht einer erfindungsgemäßen Aufnahmevorrichtung 10, welche ein Tragelement 50, ein erstes Halteelement 30 sowie ein zweites Halteelement 40 umfasst. Genauer gesagt zeigt Figur 1 ein Ausführungsbeispiel der Aufnahmevorrichtung 10, bei welchem sich zwei Halteelemente 30, 40 gegenüberstehen und gemeinsam ein Halteelementpaar bilden. Hierbei entsprechen sich die Halteelemente 30, 40, sodass die Rollenzuordnung als erste oder zweite Halteelemente bei diesem Beispiel beliebig ist.

Jedes der Halteelemente 30, 40 weist einen ersten bzw. zweiten Stützabschnitt 31, 41 und einen ersten bzw. zweiten Klemmabschnitt 35, 45 auf. Die Klemmabschnitte 35, 45 sind über den jeweiligen Stützabschnitt 31, 41 mit der Tragelementoberfläche 50s verbunden. Hierbei ragen der erste bzw. zweite Stützabschnitt 31, 41 entlang einer orthogonal zur Tragelementoberfläche 50s gerichteten Tragelementhochachse Z aus der Tragelementoberfläche 50s heraus. Der erste bzw. zweite Klemmabschnitt 34, 45 des ersten bzw. zweiten Halteelements 30, 40 ist über ein erstes bzw. zweites proximales Ende 30p, 40p mit dem ersten bzw. zweiten Stützabschnitt 31, 41 verbunden und erstreckt sich bogenförmig von dem ersten bzw. zweiten proximalen Ende 30p, 40p hin zu einem ersten bzw. zweiten distalen Ende 30d, 40d. Ab dem proximalen Ende 30p, 40p des ersten bzw. zweiten Halteelements 30,40 ist (in Richtung zu dem distalen Ende 30d, 40d hin) die Wandstärke des ersten bzw. zweiten Halteelements 30,40 konstant und weicht hiervon lediglich im Bereich der distalen Enden 30d, 40d ab.

Ferner weist der erste bzw. zweite Klemmabschnitt 35, 45 eine radial nach außen gewölbte erste bzw. zweite Klemmabschnittaußenfläche 36, 46 auf, welche von dem ersten bzw. zweiten proximalen Ende 30p, 40p zu dem ersten bzw. zweiten distalen Ende 30d, 40d hin einen mit einem Abstand von dem ersten bzw. zweiten proximalen Ende 30p, 40p zunehmenden Krümmungsradius r1, r2 aufweist. Die erste und zweite Klemmabschnittaußenfläche 36, 46 weisen in dem Ausführungsbeispiel eine Evolventenfläche einer Kreisevolvente auf, d.h. in der Projektion auf die Projektionsebene bildet deren Projektionslinie eine Kreisevolvente, welche sich über 70%, bevorzugt 90%, besonders bevorzugt die ganze Länge der Projektionslinie (zwischen proximalem und distalem Ende) erstreckt.

Der erste und der zweite Klemmabschnitt 35 ,45 sind in einer jeweiligen Hauptkrümmungsebene KE1, KE2 gebogen. Die Hauptkrümmungsebene KE1, KE2 ist definiert als diejenige Ebene, in der die Krümmungsradien der ersten bzw. zweiten Klemmabschnittaußenfläche 36, 46 liegen. Anders gesagt enthält die Hauptkrümmungsebene KE1, KE2 die Krümmungsradien der Klemmabschnittaußenfläche 36 bzw. 46. In einer Projektionsebene E parallel zur Hauptkrümmungsebene KE1 des ersten Klemmabschnitts 35 ist der erste Klemmabschnitt 35 dem zweiten Klemmabschnitt 45 zugewandt. Im gezeigten Ausführungsbeispiel entsprechen sich das erste und zweite Halteelement 30, 40, sodass das zweite Halteelement 40 in der Projektionsebene E eine gespiegelte Darstellung des ersten Halteelements 30 ist. Zudem sind in dem Beispiel die erste und zweite Hauptkrümmungsebene KE1, KE2 zueinander und zur Projektionsebene E parallel.

Aus Figur 1 ist zudem ersichtlich, dass sowohl die ersten und zweiten Stützabschnitte 31, 41 als auch die ersten und zweiten Klemmabschnitte 35, 45 auf ihren Innenseiten Entformungsschrägen aufweisen. Genauer gesagt sind in einer Projektion auf die Projektionsebene E die einander zugewandten Innenseiten der beiden Stützabschnitte 31, 41 derart relativ zur Tragelementhochachse Z verkippt, dass eine Entformung (d.h ein Herausziehen eines Werkzeuges nach unten in negativer Z-Richtung) ermöglicht wird. Die Klemmabschnitte 35, 45 sind zumindest in einem Teil ihrer den Innenseiten der Stützabschnitte 31, 41 zugewandten Innenflächen diesen gegenüber gegenläufig verkippt, um die Entformung zu ermöglichen. Als Entformungswinkel kommen hierbei bspw. 1°, bevorzugt 3°, besonders bevorzugt 5° in Betracht.

**Figur 2** zeigt eine vergrößerte Seitenansicht der Aufnahmevorrichtung 10 mit einer darin aufgenommenen (in diesem Ausführungsbeispiel zylinderförmigen) LWL-Komponente 20. Der erste und der zweite Stützabschnitt 31, 41 sind an ihren jeweiligen distalen Enden 30d, 40d um einen ersten bzw. zweiten Abstand d1, d2, welcher parallel zu der Tragelementhochachse Z definiert ist, von der Tragelementoberfläche 50s beabstandet. Hierbei betragen der erste und der zweite Abstand d1, d2 1,3 mm.

Ferner sind die distalen Enden 30d, 40d des ersten bzw. zweiten Klemmabschnitts 35, 45, parallel zu der Tragelementoberfläche 50s, um einen dritten Abstand d3 voneinander beabstandet. An einer engsten Stelle zwischen der ersten und der zweiten Klemmabschnittaußenfläche 36, 46 ist ein parallel zu der Tragelementoberfläche 50s gemessener (minimaler) vierter Abstand d4 definiert, welcher kleiner ist als der dritte Abstand d3. Bevorzugt beträgt der dritte Abstand d3 höchstens 4 mm, besonders bevorzugt höchstens 3 mm, mindestens jedoch 2 mm. Ferner beträgt der vierte Abstand d4 bevorzugt höchstens 3 mm, besonders bevorzugt höchstens 2 mm, mindestens jedoch 1 mm.

Die beiden Klemmabschnitte 35, 40 weisen ferner eine jeweilige vertikale Ausdehnung Z1, Z2, welche ausgehend von einem Scheitelpunkt der Klemmabschnittaußenfläche 36, 46 hin zum distalen Ende 30d, 40d in vertikaler (d.h. orthogonal zur Tragelementoberfläche 50s), sowie eine jeweilige horizontale Ausdehnung Y1, Y2, welche ausgehend von dem proximalen Ende 30p, 40p hin zum distalen Ende 30d, 40d in horizontaler Richtung (d.h. parallel zur Tragelementoberfläche 50s) bestimmt werden, auf. Die vertikale Ausdehnung Z1, Z2 ist größer als die horizontale Ausdehnung Y1, Y2.

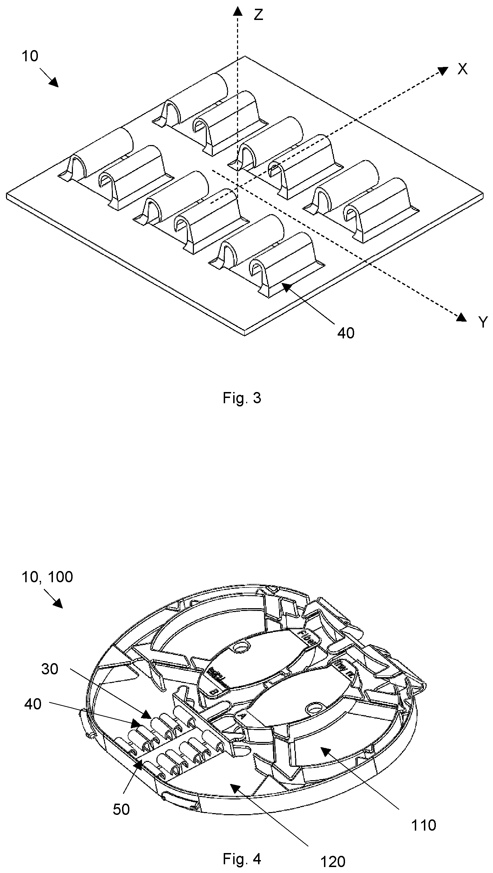

Unterhalb der beiden Stützabschnitte 31, 41 (d. h. im Bereich zwischen dem ersten und dem zweiten Halteelement 30, 40) weist die Tragelementoberfläche 50s eine Tragelementaussparung 52 auf, wie u. a. in Figur 3 erkennbar.

**Figur 3** zeigt eine perspektivische Ansicht der Aufnahmevorrichtung 10 mit mehreren, nämlich insgesamt sechs Halteelementpaaren aus einem ersten und einem zweiten Halteelement 30, 40. In dem gezeigten Ausführungsbeispiel entsprechen sich die Halteelemente 30, 40, sodass die Rollenzuordnung als erste oder zweite Halteelemente 30, 40 in diesem Beispiel beliebig ist. Wie aus Figur 3 ersichtlich ist, sind die sechs Halteelementpaare in zwei entlang einer Längsrichtung X voneinander beabstandeten Reihen angeordnet, wobei in jeder der Reihen entlang einer Querrichtung Y drei Paare aufeinander folgen. Dies ermöglicht es, auf geringem Bauraum eine Vielzahl von LWL-Komponenten 20, insbesondere längliche, zu fixieren.

**Figur 4** zeigt eine perspektivische Ansicht einer LWL-Kassette 100 mit einer darin angeordneten Aufnahmevorrichtung 10. Die Aufnahmevorrichtung 10 entspricht im Wesentlichen derjenigen der Figur 3, jedoch weist diese zusätzlich zwei vertikale Seitenwände auf, welche sich parallel zu der Tragelementhochachse Z aus der Tragelementoberfläche 50s erheben. Die LWL-Kassette 100 umfasst eine Überlängenablage 110 sowie einen Aufnahmebereich 120. Die mit den LWL-Komponenten 20, hier beispielsweise einem Filter oder einem Splitter, verbundenen Lichtwellenleiter werden nach der Montage der LWL-Komponente 20 an diesem in der Aufnahmevorrichtung 10 abgelegt und mittels der Aufnahmeelemente 30, 40 in dieser fixiert.

Mehrere der LWL-Kassetten 100 können zu einem LWL-Kassettenstapel kombiniert werden und in einem LWL-Modul untergebracht sein. Unter einem LWL-Modul wird eine Vorrichtung zur Aufnahme von Aufnahme- und Patchstellen verstanden, in welcher typischerweise eine Mehrzahl (z. B. zwölf oder eine Vielzahl von zwölf) Glasfasern in Kabeln mit jeweils einer einzelnen Glasfaser in jeweiligen LWL-Kassetten verbunden bzw. gespleißt sind und mit kurzen Anschlussfasern (Pigtails) auf Abschlusselemente (etwa Stecker) geführt werden. Dort können dann zur Weiterführung der Glasfaserverbindungen LWL-Kabel mit Verbindungselementen (etwa Steckern) eingesetzt werden, wie dies beispielsweise auch in der europäischen Patentanmeldung EP 3 511 753 A1 beschrieben ist.

Ferner können mehrere LWL-Module zu einem LWL-Modulstapel kombiniert werden, z. B. in einem Verteilerschrank. Derartige Ausgestaltungen sind beispielsweise in den europäischen Patentanmeldungen EP 3 511 753 A1 und EP 3 916 449 A1 sowie in der deutschen Gebrauchsmusterschrift DE 20 2013 012 809 U1 beschrieben.

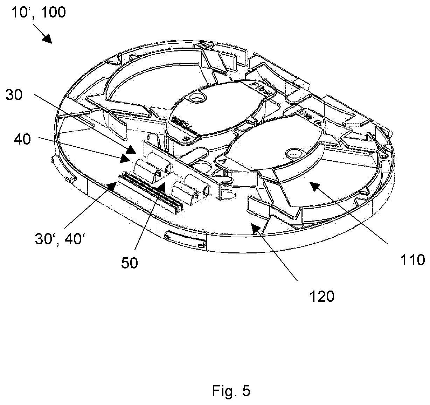

**Figur 5** zeigt eine perspektivische Ansicht einer weiteren LWL-Kassette 100 mit einer anderen darin angeordneten, ebenfalls erfindungsgemäßen Aufnahmevorrichtung 10'. Neben den an sich vorstehend beschriebenen Halteelementpaaren 30, 40 sind auf der Tragelementoberfläche 50s noch weitere Haltelemente 30', 40' angeordnet, welche im Wesentlichen aus einander gegenüberliegenden und sich parallel aus der Tragelementoberfläche 50s erhebenden, plattenartigen Stützelementen bestehen. Diese Stützelemente können beispielsweise zur Fixierung schmalerer Komponenten wie Schrumpf- oder Crimpspleißschutzen verwendet werden. In der gezeigten LWL-Kassette 100 können zudem mittels der Haltelementpaare 30, 40 mit bogenförmiger Klemmabschnittaußenfläche größere Komponenten wie LWL-Splitter, LWL-Filter oder optische Adapter aufgenommen werden.

### Bezugszeichen

- 10, 10': Aufnahmevorrichtung
- 20: Lichtwellenleiter-Komponente (kurz: LWL-Komponente)
- 30, 30': erstes Halteelement
- 30p: erstes proximales Ende
- 30d: erstes distales Ende
- 31: erster Stützabschnitt
- 35: erster Klemmabschnitt
- 36: erste Klemmabschnittaußenfläche
- 40, 40': zweites Halteelement
- 40p: zweites proximales Ende
- 40d: zweites distales Ende
- 41: zweiter Stützabschnitt
- 45: zweiter Klemmabschnitt
- 46: zweite Klemmabschnittaußenfläche
- 50: Tragelement
- 50s: Tragelementoberfläche
- 51: Randelement
- 52: Aussparung
- 100: LWL-Kassette
- 110: Überlängenablage
- 120: Aufnahmebereich
- 200: LWL-Modul
- d1: erster Abstand
- d2: zweiter Abstand
- d3: dritter Abstand
- d4: vierter Abstand
- r1: Krümmungsradius (der ersten Klemmabschnittaußenfläche 36)
- r2: Krümmungsradius (der zweiten Klemmabschnittaußenfläche 46)
- KE1: Hauptkrümmungsebene (des ersten Halteelements 30)
- KE2: Hauptkrümmungsebene (des zweiten Halteelements 31)
- Y1: horizontale Ausdehnung (des ersten Klemmabschnitts 35)
- Y2: horizontale Ausdehnung (des zweiten Klemmabschnitts 45)
- Z1: vertikale Ausdehnung (des ersten Klemmabschnitts 35)
- Z2: vertikale Ausdehnung (des zweiten Klemmabschnitts 45)
- X: Längsrichtung
- Y: Querrichtung
- Z: Tragelementhochachse

## Patentansprüche

1. Aufnahmevorrichtung (10) zur Aufnahme einer Lichtwellenleiter-Komponente (LWL-Komponente) (20), wobei die Aufnahmevorrichtung (10) umfasst:
ein Tragelement (50) aufweisend eine Tragelementoberfläche (50s), welche eine orthogonal zur Tragelementoberfläche (50s) gerichtete Tragelementhochachse (Z) definiert;
ein erstes Halteelement (30), welches einen ersten Stützabschnitt (31) und einen ersten Klemmabschnitt (35) aufweist,
wobei der erste Stützabschnitt (31) entlang der Tragelementhochachse (Z) aus der Tragelementoberfläche (50s) herausragt,
wobei der erste Klemmabschnitt (35) über ein erstes proximales Ende (30p) mit dem ersten Stützabschnitt (31) verbunden ist und sich bogenförmig von dem ersten proximalen Ende (30p) hin zu einem ersten distalen Ende (30d) erstreckt,
und wobei der erste Klemmabschnitt (35) eine radial nach außen gewölbte erste Klemmabschnittaußenfläche (36) aufweist; und
ein zweites Halteelement (40), welches auf der Tragelementoberfläche (50s) angeordnet ist, wobei in einer Projektion auf eine Projektionsebene (E), welche parallel zu einer Hauptkrümmungsebene (KE1) des ersten Klemmabschnitts (35) definiert ist, der erste Klemmabschnitt (35) dem zweiten Haltelement (40) zugewandt ist;
**dadurch gekennzeichnet, dass** die Klemmabschnittaußenfläche (36) zumindest teilweise in Richtung des zweiten Halteelements (40) blickt und einen von dem ersten proximalen Ende (30p) zu dem ersten distalen Ende (30d) hin mit einem Abstand von dem ersten proximalen Ende (30p) zunehmenden Krümmungsradius (r1) aufweist.

2. Aufnahmevorrichtung (10) nach Anspruch 1, bei welcher das zweite Halteelement (40) einen zweiten Stützabschnitt (41) und einen zweiten Klemmabschnitt (45) aufweist,
wobei der zweite Stützabschnitt (41) entlang der Tragelementhochachse (Z) aus der Tragelementoberfläche (50s) herausragt,
wobei der zweite Klemmabschnitt (45) über ein zweites proximales Ende (40p) mit dem zweiten Stützabschnitt (41) verbunden ist und sich bogenförmig von dem zweiten proximalen Ende (40p) hin zu einem zweiten distalen Ende (40d) erstreckt,
wobei der zweite Klemmabschnitt (45) eine radial nach außen gewölbte zweite Klemmabschnittaußenfläche (46) aufweist, welche von dem zweiten proximalen Ende (40p) zu dem zweiten distalen Ende (40d) hin einen mit einem Abstand von dem zweiten proximalen Ende (40p) zunehmenden Krümmungsradius (r2) aufweist,
und wobei in der Projektion auf die Projektionsebene (E) der erste Klemmabschnitt (35) dem zweiten Klemmabschnitt (45) zugewandt ist.

3. Aufnahmevorrichtung (10) nach Anspruch 2, bei welcher die erste Klemmabschnittaußenfläche (36) und/oder die zweite Klemmabschnittaußenfläche (46) eine Evolventenfläche einer Kreisevolvente aufweist.

4. Aufnahmevorrichtung (10) nach Anspruch 2 oder 3, bei welcher das erste distale Ende (30d) des ersten Klemmabschnitts und/oder das zweite distale Ende (40d) des zweiten Klemmabschnitts (40) um einen ersten bzw. zweiten Abstand (d1, d2), welcher parallel zu der Tragelementhochachse (Z) definiert ist, von der Tragelementoberfläche (50s) beabstandet, wobei der erste bzw. zweite Abstand (d1, d2) bevorzugt höchstens 2,0 mm, und bevorzugt mindestens 1,0 mm beträgt.

5. Aufnahmevorrichtung (10) nach einem der Ansprüche 2 bis 4, bei welcher ein dritter Abstand (d3), welcher zwischen der ersten Klemmabschnittaußenfläche (36) und der zweiten Klemmabschnittaußenfläche (46) an dem ersten distalen Ende (30d) und/oder dem zweiten distalen Ende (40d), gemessen parallel zu der Tragelementoberfläche (50s), definiert ist, größer oder gleich einem vierten Abstand (d4), welcher an einer Stelle eines minimalen Abstands zwischen der ersten Klemmabschnittaußenfläche (36) und der zweiten Klemmabschnittaußenfläche (46), gemessen parallel zu der Tragelementoberfläche (50s), definiert ist, ist.

6. Aufnahmevorrichtung (10) nach Anspruch 5, bei welcher der dritte Abstand (d3) bevorzugt höchstens 4 mm, besonders bevorzugt höchstens 3 mm, mindestens jedoch 2 mm, beträgt; und bei welcher der vierte Abstand (d4) bevorzugt höchstens 3 mm, besonders bevorzugt höchstens 2 mm, mindestens jedoch 1 mm, beträgt.

7. Aufnahmevorrichtung (10) nach einem der Ansprüche 2 bis 6, bei welcher der erste Klemmabschnitt (35) dem zweiten Klemmabschnitt (45) zumindest teilweise, bevorzugt vollständig, unmittelbar gegenüberliegend auf der Tragelementoberfläche (50s) angeordnet ist.

8. Aufnahmevorrichtung (10) nach einem der Ansprüche 2 bis 7, bei welcher auf der Tragelementoberfläche (50s) zumindest in einer Längsrichtung (X) und/oder einer Querrichtung (Y) mindestens zwei Paare aus einander unmittelbar gegenüberliegenden Halteelementen (30, 40) angeordnet sind.

9. Aufnahmevorrichtung (10) nach einem der Ansprüche 2 bis 8, bei welcher bei den Klemmabschnitten (35, 40) in der Projektion auf die Projektionsebene (E) eine vertikale Ausdehnung (Z1, Z2) größer ist als eine horizontale Ausdehnung (Y1, Y2).

10. Aufnahmevorrichtung (10) nach einem der vorstehenden Ansprüche, bei welcher der erste Klemmabschnitt (36) und/oder der zweite Klemmabschnitt (46) eine Wandstärke aufweist, welche bevorzugt um kleiner als 15%, besonders bevorzugt um kleiner als 5%, von einer mittleren Wandstärke abweicht.

11. Aufnahmevorrichtung (10) nach einem der vorstehenden Ansprüche, wobei die Aufnahmevorrichtung (10) aus Kunststoff, vorzugsweise einstückig, vorzugsweise aus einem ABS-Kunststoff, bevorzugt als Spritzgussteil, hergestellt ist.

12. LWL-Kassette (100) zur Aufnahme zumindest einer LWL-Komponente (20), wobei die LWL-Kassette (100) zumindest eine Überlängenablage (110) und einen Aufnahmebereich (120) mit einer Aufnahmevorrichtung (10) nach einem der Ansprüche 1 bis 11 aufweist.

13. LWL-Modul (200) aufweisend eine Mehrzahl von LWL-Kassetten (100) nach Anspruch 12 und zumindest einer Patchstelle.

14. LWL-Modulstapel mit einer Mehrzahl von LWL-Modulen (200) nach Anspruch 13.

15. Verwendung einer Aufnahmevorrichtung (10) nach einem der Ansprüche 1 bis 11 in einer LWL-Kassette (100) nach Anspruch 12, vorzugsweise außerdem in Form einer Verwendung der LWL-Kassette (100) in einem LWL-Modul (200) nach Anspruch 13, besonders bevorzugt in Form einer Verwendung des LWL-Moduls (200) in einem LWL-Modulstapel nach Anspruch 14 zur Aufnahme zumindest eines LWL-Splitters, eines LWL-Filters, eines LWL-Spleißschutzes und/oder eines optischen Adapters.

## Claims

1. A receiving device (10) for receiving an optical fiber cable component (OFC component) (20), the receiving device (10) comprising:
a support element (50) having a support element surface (50s) which defines a support element vertical axis (Z) directed orthogonally to the support element surface (50s);
a first retaining element (30) which has a first support portion (31) and a first clamping portion (35),
wherein the first support portion (31) projects out of the support element surface (50s) along the support element vertical axis (Z),
wherein the first clamping portion (35) is connected to the first support portion (31) via a first proximal end (30p) and extends in an arcuate manner from the first proximal end (30p) towards a first distal end (30d),
and wherein the first clamping portion (35) has a radially outwardly curved first clamping portion outer surface (36) which has a radius of curvature (r1) increasing with a distance from the first proximal end (30p) from the first proximal end (30p) towards the first distal end (30d); and
a second retaining element (40) which is arranged on the support element surface (50s), wherein, in a projection onto a projection plane (E) which is defined parallel to a main plane of curvature (KE1) of the first clamping portion (35), the first clamping portion (35) faces the second retaining element (40).

2. The receiving device (10) according to claim 1, wherein the second retaining element (40) has a second support portion (41) and a second clamping portion (45),
wherein the second support portion (41) projects out of the support element surface (50s) along the support element vertical axis (Z),
wherein the second clamping portion (45) is connected to the second support portion (41) via a second proximal end (40p) and extends in an arcuate manner from the second proximal end (40p) towards a second distal end (40d),
wherein the second clamping portion (45) has a radially outwardly curved second clamping portion outer surface (46) which has a radius of curvature (r2) increasing with a distance from the second proximal end (40p) from the second proximal end (40p) towards the second distal end (40d),
and wherein, in the projection onto the projection plane (E), the first clamping portion (35) faces the second clamping portion (45).

3. The receiving device (10) according to claim 2, wherein the first clamping portion outer surface (36) and/or the second clamping portion outer surface (46) has an involute surface of a involute of a circle.

4. The receiving device (10) according to claim 2 or 3, wherein the first distal end (30d) of the first clamping portion and/or the second distal end (40d) of the second clamping portion (40) is spaced apart from the support element surface (50s) by a first and second distance (d1, d2), respectively, which is defined parallel to the support element vertical axis (Z), wherein the first and second distance (d1, d2), respectively, is preferably at most 2.0 mm, and preferably at least 1.0 mm.

5. The receiving device (10) according to any one of claims 2 to 4, wherein a third distance (d3) which is defined between the first clamping portion outer surface (36) and the second clamping portion outer surface (46) at the first distal end (30d) and/or the second distal end (40d), measured parallel to the support element surface (50s), is greater than or equal to a fourth distance (d4) which is defined at a point of a minimum distance between the first clamping portion outer surface (36) and the second clamping portion outer surface (46), measured parallel to the support element surface (50s).

6. The receiving device (10) according to claim 5, wherein the third distance (d3) is preferably at most 4 mm, particularly preferably at most 3 mm, but at least 2 mm; and wherein the fourth distance (d4) is preferably at most 3 mm, particularly preferably at most 2 mm, but at least 1 mm.

7. The receiving device (10) according to any one of claims 2 to 6, wherein the first clamping portion (35) is arranged on the support element surface (50s) at least partially, preferably completely, directly opposite the second clamping portion (45).

8. The receiving device (10) according to any one of claims 2 to 7, wherein at least two pairs of retaining elements (30, 40) directly opposite each other are arranged on the support element surface (50s) at least in a longitudinal direction (X) and/or a transverse direction (Y).

9. The receiving device (10) according to any one of claims 2 to 8, wherein, in the clamping portions (35, 40), in the projection onto the projection plane (E), a vertical extent (Z1, Z2) is greater than a horizontal extent (Y1, Y2).

10. The receiving device (10) according to any one of the preceding claims, wherein the first clamping portion (36) and/or the second clamping portion (46) has a wall thickness which preferably deviates from an average wall thickness by less than 15%, particularly preferably by less than 5%.

11. The receiving device (10) according to any one of the preceding claims, wherein the receiving device (10) is made of plastic, preferably in one piece, preferably of an ABS plastic, preferably as an injection-molded part.

12. An OFC cassette (100) for receiving at least one OFC component (20), the OFC cassette (100) having at least one excess length shelf (110) and a receiving region (120) with a receiving device (10) according to any one of claims 1 to 11.

13. An OFC module (200) having a plurality of OFC cassettes (100) according to claim 12 and at least one patch site.

14. An OFC module stack with a plurality of OFC modules (200) according to claim 13.

15. Use of a receiving device (10) according to any one of claims 1 to 11 in an OFC cassette (100) according to claim 12, preferably also in the form of a use of the OFC cassette (100) in an OFC module (200) according to claim 13, particularly preferably in the form of a use of the OFC module (200) in an OFC module stack according to claim 14 for receiving at least one OFC splitter, an OFC filter, an OFC splice protection and/or an optical adapter.

## Revendications

1. Dispositif de réception (10) destiné à recevoir un composant à fibres optiques (20), le dispositif de réception (10) comprenant :
un élément de support (50) présentant une surface d'élément de support (50s) qui définit un axe vertical d'élément de support (Z) orienté orthogonalement à la surface d'élément de support (50s) ;
un premier élément de retenue (30) qui présente une première partie de support (31) et une première partie de serrage (35),
la première partie de support (31) faisant saillie de la surface d'élément de support (50s) le long de l'axe vertical d'élément de support (Z),
la première partie de serrage (35) étant reliée à la première partie de support (31) par une première extrémité proximale (30p) et s'étendant en forme d'arc de la première extrémité proximale (30p) vers une première extrémité distale (30d),
et la première partie de serrage (35) présentant une première surface extérieure de partie de serrage (36) bombée radialement vers l'extérieur qui présente un rayon de courbure (r1) augmentant avec une distance de la première extrémité proximale (30p) de la première extrémité proximale (30p) vers la première extrémité distale (30d) ; et
un deuxième élément de retenue (40) qui est disposé sur la surface d'élément de support (50s), la première partie de serrage (35) étant tournée vers le deuxième élément de retenue (40) dans une projection sur un plan de projection (E) qui est défini parallèlement à un plan de courbure principal (KE1) de la première partie de serrage (35).

2. Dispositif de réception (10) selon la revendication 1, dans lequel le deuxième élément de retenue (40) présente une deuxième partie de support (41) et une deuxième partie de serrage (45),
la deuxième partie de support (41) faisant saillie de la surface d'élément de support (50s) le long de l'axe vertical d'élément de support (Z),
la deuxième partie de serrage (45) étant reliée à la deuxième partie de support (41) par une deuxième extrémité proximale (40p) et s'étendant en forme d'arc de la deuxième extrémité proximale (40p) vers une deuxième extrémité distale (40d),
la deuxième partie de serrage (45) présentant une deuxième surface extérieure de partie de serrage (46) bombée radialement vers l'extérieur qui présente un rayon de courbure (r2) augmentant avec une distance de la deuxième extrémité proximale (40p) de la deuxième extrémité proximale (40p) vers la deuxième extrémité distale (40d),
et la première partie de serrage (35) étant tournée vers la deuxième partie de serrage (45) dans la projection sur le plan de projection (E).

3. Dispositif de réception (10) selon la revendication 2, dans lequel la première surface extérieure de partie de serrage (36) et/ou la deuxième surface extérieure de partie de serrage (46) présente une surface développante d'une développante circulaire.

4. Dispositif de réception (10) selon la revendication 2 ou 3, dans lequel la première extrémité distale (30d) de la première partie de serrage et/ou la deuxième extrémité distale (40d) de la deuxième partie de serrage (40) sont espacées de la surface d'élément de support (50s) d'une première ou d'une deuxième distance (d1, d2) qui est définie parallèlement à l'axe vertical d'élément de support (Z), la première ou la deuxième distance (d1, d2) étant de préférence d'au plus 2,0 mm, et de préférence d'au moins 1,0 mm.

5. Dispositif de réception (10) selon l'une quelconque des revendications 2 à 4, dans lequel une troisième distance (d3) qui est définie entre la première surface extérieure de partie de serrage (36) et la deuxième surface extérieure de partie de serrage (46) au niveau de la première extrémité distale (30d) et/ou de la deuxième extrémité distale (40d), mesurée parallèlement à la surface d'élément de support (50s), est supérieure ou égale à une quatrième distance (d4) qui est définie à un emplacement d'une distance minimale entre la première surface extérieure de partie de serrage (36) et la deuxième surface extérieure de partie de serrage (46), mesurée parallèlement à la surface d'élément de support (50s).

6. Dispositif de réception (10) selon la revendication 5, dans lequel la troisième distance (d3) est de préférence d'au plus 4 mm, de manière particulièrement préférée d'au plus 3 mm, mais d'au moins 2 mm ; et dans lequel la quatrième distance (d4) est de préférence d'au plus 3 mm, de manière particulièrement préférée d'au plus 2 mm, mais d'au moins 1 mm.

7. Dispositif de réception (10) selon l'une quelconque des revendications 2 à 6, dans lequel la première partie de serrage (35) est disposée sur la surface d'élément de support (50s) au moins en partie, de préférence complètement, directement en face de la deuxième partie de serrage (45).

8. Dispositif de réception (10) selon l'une quelconque des revendications 2 à 7, dans lequel au moins deux paires d'éléments de retenue (30, 40) directement en face l'un de l'autre sont disposées sur la surface d'élément de support (50s) au moins dans une direction longitudinale (X) et/ou une direction transversale (Y).

9. Dispositif de réception (10) selon l'une quelconque des revendications 2 à 8, dans lequel une étendue verticale (Z1, Z2) est supérieure à une étendue horizontale (Y1, Y2) dans les parties de serrage (35, 40) dans la projection sur le plan de projection (E).

10. Dispositif de réception (10) selon l'une quelconque des revendications précédentes, dans lequel la première partie de serrage (36) et/ou la deuxième partie de serrage (46) présente une épaisseur de paroi qui s'écarte de préférence de moins de 15 %, de manière particulièrement préférée de moins de 5 %, d'une épaisseur de paroi moyenne.

11. Dispositif de réception (10) selon l'une quelconque des revendications précédentes, dans lequel le dispositif de réception (10) est fabriqué en matière plastique, de préférence d'une seule pièce, de préférence en une matière plastique ABS, de préférence sous forme de pièce moulée par injection.

12. Cassette d'épissures (100) destinée à recevoir au moins un composant à fibres optiques (20), la cassette d'épissures (100) présentant au moins un dépôt de surlongueur (110) et une zone de réception (120) avec un dispositif de réception (10) selon l'une quelconque des revendications 1 à 11.

13. Module d'épissures (200) présentant une pluralité de cassettes d'épissures (100) selon la revendication 12 et au moins un emplacement de patch.

14. Pile de modules d'épissures avec une pluralité de modules d'épissures (200) selon la revendication 13.

15. Utilisation d'un dispositif de réception (10) selon l'une quelconque des revendications 1 à 11 dans une cassette d'épissures (100) selon la revendication 12, de préférence en outre sous la forme d'une utilisation de la cassette d'épissures (100) dans un module d'épissures (200) selon la revendication 13, de manière particulièrement préférée sous la forme d'une utilisation du module d'épissures (200) dans une pile de modules d'épissures selon la revendication 14 pour recevoir au moins un séparateur d'épissures, un filtre d'épissures, une protection contre l'épissure d'épissures et/ou un adaptateur optique.
